# EUROPEAN PATENT APPLICATION

(11) **EP 4 462 156 A1**
(43) Date of publication of application: **13.11.2024**
(21) Application number: 23172594.6
(22) Date of filing: 10.05.2023
(51) Int. Cl.: G01S 7/4911, G01S 17/34, G01S 17/931

(54) **METHOD AND DEVICE FOR PERFORMING SCANNING FMCW LIDAR RANGE MEASUREMENTS**

(71) Applicant: Scantinel Photonics GmbH, 89077 Ulm (DE)
(72) Inventor: Horn, Dr. Jan, 80636 Munich (DE); Malz, Dr. Ing. André, 80637 Munich (DE)
(74) Representative: Ostertag & Partner Patentanwälte mbB

(57) **Abstract**

In a method for performing scanning FMCW LiDAR range measurements, laser light (L, L') having a varying frequency is produced and directed in different directions. A superposition of laser light that was reflected at an object (12) with laser light that was not reflected at the object (12) is detected and used to determine the range to the object (12). A radiant power of the laser light (L, L') is varied depending on at least one time varying parameter, for example a pitch angle or velocity of a vehicle on which the method is performed, and/or on the direction in which the laser light (L, L') is directed.

## Description

### BACKGROUND OF THE INVENTION

### 1. Field of the Invention

The invention relates to a method and a device for scanning range - and preferably also velocity - measurement relative to a moving or unmoving object on the basis of FMCW LiDAR technology. Such devices can be used, for example, in autonomously driving vehicles and may be implemented - at least to some extent - as photonic integrated circuits (PIC) that do not contain any moving parts.

### 2. Description of Related Prior Art

Frequency-modulated continuous wave (FMCW) is a range and velocity measuring technology which was originally developed for RADAR applications. If light instead of radio waves are used, this technology is usually referred to as FMCW LiDAR, in which LiDAR is an acronym for "Light Detection And Ranging".

In an FMCW LiDAR device, a frequency-modulated ("chirped") light beam scans the environment. A small fraction of the light is diffusely reflected at the object, received by the device and superimposed with a local oscillator wave. The frequency difference between the two signals, which is usually referred to as beat frequency, is measured and used to compute the range R of the object. It is also possible to compute the radial relative velocity ν based on the Doppler frequency shift that is observed in the presence of a relative velocity.

By using a tunable laser as light source and a photodiode as detector, the beat frequency can be extracted directly from the photodiode current, because the photodiode delivers a current that is proportional to the squared sum of the two optical waves ("self-mixing effect").

Scanning devices based on this measurement principle must be very robust and reliable if they are to be used in vehicles. This is true in particular if the vehicles drive autonomously, since the safety in autonomous driving is decisively dependent on the scanning device that is used to generate a three-dimensional profile of the environment. Scanning devices which are implemented as photonic integrated circuits (PIC) do not require moving components and are therefore particularly suitable for applications in vehicles.

Such PIC scanning devices are disclosed, for example, in WO 2021/209514 A1. The devices disclosed in this document include a distribution matrix comprising a plurality of optical switches that are arranged as a binary tree. This distribution matrix distributes the optical signals among different free space couplers that emit the optical signal into free space. The free space couplers are arranged in a front focal plane of an optical system that directs the optical signals optical waveguides into various directions.

If the device is to be used in vehicles, it should be able to measure ranges up to a few hundred meters. Such long ranges require light beams having a high radiant power. Since the energy conversion efficiency of the light sources is low, high losses are inevitable. This, in turn, leads to heating problems that can be solved only by expensive active cooling systems.

### SUMMARY OF THE INVENTION

It is an object of the present invention to provide a method and a device for performing scanning FMCW LiDAR range measurements that require less power, thereby reducing the effort required for cooling the device.

With regard to the method, this object is achieved, in accordance with the present invention, by a method comprising the following steps:
producing laser light having a varying frequency;
directing the laser light in different directions;
detecting a superposition of laser light that was reflected at an object with laser light that was not reflected at the object;
determining the range to the object based on the detected superposition;
wherein a radiant power of the laser light is varied depending on at least one time varying parameter and/or on the direction in which the laser light is directed.

The invention is based on the perception that it is not always necessary to produce laser light having the maximum radiant power. For example, if the device is installed on a vehicle, maximum power is usually necessary if there is a distant vehicle approaching on the same street. This vehicle must be detected early and with the maximum available precision. However, less power is required to detect a tree that is very close, but outside the path of the vehicle. Similar considerations apply if the device is not installed on a vehicle, but on other moving or stationary objects. For example, a device used for detecting movements of animals in a given area may reduce the radiant power if no animal is detected.

It is usually not possible to change the output power of the laser light source that generates the laser light. Varying the injection current changes the frequency, but has not significant effect on the radiant power. In a preferred embodiment, a light amplifier, which is arranged in a light path of the laser light, amplifies the laser light by a gain factor G. The radiant power of the laser light is varied by changing the gain factor G. However, power variation may also be achieved - although not preferred - by a variable attenuation in an attenuator. This is feasible if the light source and the attenuator are placed in an area that can be easily cooled.

If the radiant power depends on the direction in which the laser light is directed, this preferably involves emitting light with higher radiant power to the central portion of the field of view (FoV), while light directed to the outer portion of the FOV will generally have a smaller radiant power.

If the device is installed on a vehicle, the at least one time varying parameter may be a steering angle of the vehicle. If the vehicle steers to one side, the light directed to this side should have maximum power, while the light directed to the opposite side may have a reduced power.

If the at least one time varying parameter is a pitch angle of the vehicle, the radiant power can be adapted to the orientation of the vehicle vis-à-vis the underground. For example, if the vehicle drives on a short ramp and the device is installed at the front of the vehicle, the vehicle performs an upward pitch rotation having the effect that more light beams are directed upward where less relevant objects or no objects at all are located. In such a situation it is useful if the light directed upwards is emitted with reduced radiant power, while light directed downwards - and now towards the street - is emitted with maximum radiant power.

If the vehicle drives with a high velocity, the detection of very distant objects becomes important. In such a situation, the at least one time varying parameter may be the velocity of the vehicle. The radiant power of light should be maximum irrespective of the light direction. If the vehicle comes to a halt, the radiant power may be reduced for all directions.

The at least one time varying parameter may also be an event. As mentioned before, the event could be the presence of any arbitrary object, or the presence of an object belonging to a predefined object class. If installed in a vehicle, for example, the 3D images obtained by the measurement are used (sometimes together with visual images taken by a camera) to determine objects and to classify them. Determining means, for example, that certain measurement pixels are recognized as belonging to the same object. Classification means that the type of object is recognized, for example a walking pedestrian or a bicycle.

It is noted that the control unit and the calculation unit referred to above as different entities may be combined as a single control and calculation unit that performs both functions. Such a combined unit may be formed by an integrated circuit (IC), for example..

Subject of the invention is also a device for scanning FMCW LiDAR range measurement. The device comprises a laser light source configured to produce laser light having a varying frequency, and a scanner configured to direct the laser light in different directions. The device further comprises a detector configured to detect a superposition of laser light that was reflected at an object with laser light that was not reflected at the object, and a calculation unit configured to determine the range to the object based on the superposition detected by the detector. A control and calculation unit is configured to vary a radiant power of the laser light depending on time varying parameters and/or on the direction in which the scanner directs the laser light.

The device may comprise a light amplifier arranged in a light path of the laser light. The control and calculation unit may then be configured to vary the radiant power of the laser light by controlling the light amplifier.

Subject of the invention is also a vehicle comprising such a measuring device. The time varying parameter may then be one in the group consisting of: a steering angle of the vehicle, a pitch angle of the vehicle, a velocity of the vehicle, and an event. The event may be a detection of an object belonging to a predefined object class.

### BRIEF DESCRIPTION OF THE DRAWINGS

Various features and advantages of the present invention may be more readily understood with reference to the following detailed description taken in conjunction with the accompanying drawings in which:
- Figure 1: is a schematic side view of a vehicle approaching an object which is detected by a scanning device according to the invention;
- Figure 2: is a top view of the scanning device shown in Figure 1;
- Figure 3: schematically shows the architecture of the scanning device according to an embodiment;
- Figure 4: is a graph illustrating the time dependent variation of the frequency of the light emitted by the scanning device;
- Figure 5: schematically shows how the light beams are steered by a distribution matrix and a collimating optics of the scanning device shown in Figure 3;
- Figure 6: is a schematic side view similar to Figure 1 illustrating light beams with different radiant power;
- Figure 7: is a graph illustrating a scan scheme in which light beams directed to a central area have a higher radiant power than light beams that are stronger deflected;
- Figure 8: is a schematic side view similar to Figure 6 in which the vehicle drives over a ramp and a pitch sensor triggers a recalculation of the angular radiant power distribution of the light beams;
- Figure 9a: is a schematic top view similar to Figure 2 illustrating that light beams directed to a central area have a higher radiant power than light beams that are stronger deflected;
- Figure 9b: is a schematic top view similar to Figure 9a, but for a vehicle that is about to turn left so that a steering angle sensor triggers a recalculation of the angular radiant power distribution of the light beams; and
- Figure 10: is a schematic top view similar to Figure 9a for a scenario in which another vehicle has been detected, which event triggers a recalculation of the angular radiant power distribution of the light beams.

### DESCRIPTION OF PREFERRED EMBODIMENTS

### 1. Application Scenario

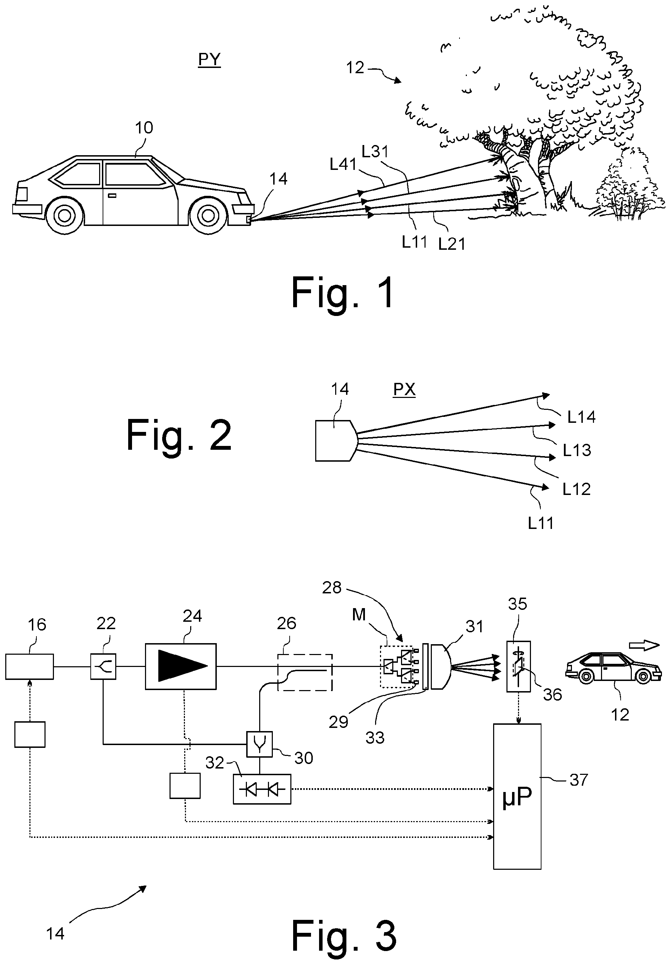

Figure 1 is a schematic side view of a vehicle 10 approaching an object 12 that is represented by a tree. The vehicle 10 has at least one scanning device 14 that emits light beams L11, L21, L31 and L41 to scan the environment ahead of the vehicle 10. From the range information generated by the scanning device 14 a three-dimensional image of the environment can be calculated. In addition, the scanning device 14 determines the relative velocity to the object 12. This information is particularly important if the object 12 is another vehicle, an animal or a pedestrian that is also moving.

As can be seen in Figure 1, the scanning device 14 emits the light beams L11 to L41 in different directions in a vertical scanning plane PY (the paper plane in Figure 1) in order to scan the environment in a vertical scanning direction. Scanning takes place also in a horizontal scanning direction, as this is shown in Figure 2 which is a top view on the scanning device 14. Four light beams L11, L12, L13 and L14 are shown which are emitted in different directions in a horizontal scanning plane PX.

For reasons of clarity, it is assumed in Figures 1 and 2 that only four light beams Ln1 to Ln4 in n = 4 different planes - i.e. a total of 16 light beams - are generated by the scanning device 14. In reality, however, the scanning device 14 emits significantly more light beams. For example, k·2n light beams are preferred, where n is a natural number between 7 and 13 and indicates how many beams are emitted in one of k scanning planes inclined at different angles, where k is a natural number between 1 and 16. In some embodiments, more than one light beam is emitted at a given time in order to achieve the desired spatial and temporal resolution.

### 2. Scanning Device

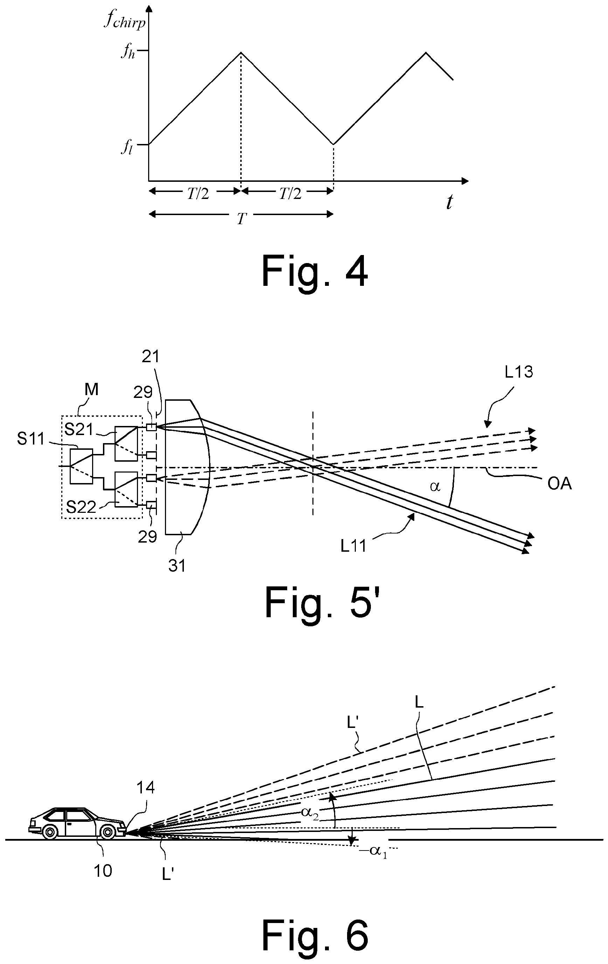

Figure 3 schematically shows the basic design of the scanning device 14 according to an embodiment of the invention. The scanning device 14 is designed as a LiDAR system and comprises an FMCW light source 16 which generates measuring light. The measuring light has a frequency *f* that varies ("chirps") periodically over time t between a lower frequency *fₗ* and a higher frequency *fₕ*, as this is shown in Figure 4.

Figure 4 also illustrates that each measurement interval with a chirp duration *T* is divided into two halves of equal length ***T***/2. During the first interval, the frequency increases linearly with a constant and positive upchirp rate *r_{chirp}* = d***f***/d***t***. During the second interval, the frequency *f* decreases linearly with a constant negative downchirp rate *-r_{chirp}.* The frequency of the measuring light can thus be described by a periodic triangular function. However, other functional relationships are also contemplated, e.g., sawtooth functions.

The light source 16 is connected to a splitter 22 that splits the measuring light into reference light (also referred to as local oscillator) and output light. In the illustrated embodiment, the output light is amplified by an optical amplifier 24 by a gain factor G and is then guided to a splitter 26 that directs the amplified output light to a deflection unit 28.

The deflection unit 28 directs the output light onto the object 12 - represented in Figure 3 by a moving car - along different directions, as it has been explained above with reference to Figures 1 and 2. To this end, the deflection unit 28 comprises, in the embodiment shown, a distribution matrix M that selectively directs the output light to one of a plurality of output waveguides each terminating in a free space coupler 29 that may be realized as a grating coupler, an edge coupler, a prism or a mirror. The free space couplers 29 are arranged in the embodiment shown along a straight line and thus form a linear array that is arranged in a front focal plane of collimating optics 31. The direction of output light emitted from the collimating optics 31 depends on the distance of the respective free space coupler 29 from the optical axis of the collimating optics 31, as this is known as such in the art.

Here it is assumed that the linear array of the free space couplers 29 is arranged horizontally. Thus, also the scanning takes place in a horizontal plane. For scanning in the vertical direction, which can be performed at a much slower rate, a mechanical scanning unit 35 comprising a movable mirror schematically indicated at 36 is provided. The mechanical scanning unit 35 is controlled by a control and calculation unit 37 and vertically deflects the light beams emerging from the collimating optics 31 in a horizontal plane. It should be noted that it is also envisaged to have an arrangement with exchanged roles, i.e. to arrange the free space couplers 29 along a vertical line in order to achieve vertical scanning, and to use the mechanical scanning unit 35 for the horizontal scan.

The deflection unit 28 and the mechanical scanning unit 35 commonly form a scanner. For the present invention, the scanner may have any arbitrary configuration as long as the scanner is capable of directing the light beams in different directions.

The output light emitted by the deflection unit 28 is at least partially diffusely reflected at the object 12. A small portion of the reflected light thus returns to the deflection unit 28, where it is re-coupled into the free space couplers 29. A part of the reflected light is split off at the splitter 26 and directed to a combiner 30 where it is superimposed with the reference light that has been separated from the measurement light by the splitter 22. Since the frequencies of the superimposed light components are slightly different due to the different optical path lengths, a beat signal is generated which is detected by a symmetrical photodetector or another type of detector 32. The electrical signals generated by the detector 32 are fed to the control and calculation unit 37, which calculates the range *R* and the relative radial velocity *ν* to the object 12 based on the detected beat frequencies.

In order to increase the amount of reflected light that contributes to the superimposition with the reference light, polarization control may be used, as this is described in EP 4 075 192 A1 relating to a multi-channel device, and unpublished patent application EP 22196020.6 filed 16.09.2022, for example. In still other embodiments, the splitter 26 is replaced by an extermal optical circulator.

Except the collimating optics 31, all components shown in Figure 3 and described in the foregoing are integrated in a photonic integrated circuit (PIC).

Figure 5 is an enlarged cutout from Figure 3 and illustrates in more detail how the beam steering for horizontal scanning is achieved in the scanning device 14. The free space couplers 29 are arrayed in the front focal plane 21 of the collimating optics 31, which deflects the light outcoupled from the free space couplers 29 such that it is emitted in different directions. As a result of the arrangement in the front focal plane 21, there is an unambiguous relationship between the locations of each free space coupler 29 and emission directions α. If the output light is switched sequentially onto the free space couplers 29 using optical switches S11, S21, S22 contained in the distribution matrix M, the output light collimated by the collimating optics 31 will be directed into various directions with respect to the optical axis OA of the collimating optics 31, as this is indicated in Figure 5 for two free space couplers 29 with solid lines (light beam L11) and dashed lines (light beam L13).

### 3. Power management

In the following, different approaches will be described how the power consumption of the scanning device 14 can be reduced without significantly compromising its function. The radiant power of the emitted laser light is varied depending on the direction in which the laser light is emitted, and/or at least one time varying parameter. A reduction of the radiant power of the laser light is preferably achieved by reducing the gain G of the amplifier 24 that is controlled by the control and calculation unit 37.

### a) Direction Dependency

According to a first approach, the decision whether the radiant power of the laser light can be reduced or not is made dependent on the direction of the laser light. As has been explained above with reference to Figures 1, 2 and 5, the laser light is sequentially directed to various directions in vertical planes PY and horizontal planes PX. By controlling the gain G of the amplifier 24, it is possible to produce, within certain limits, almost any arbitrary angular radiant power distribution of the light beams.

Figure 6 illustrates in a schematic side view a scenario similar to the one shown in Figure 1 in which the vehicle 10 supports the scanning device 14. In contrast to Figure 1, not all light beams are emitted with the same radiant power. Only the light beams L in a central region and drawn in solid lines are emitted with full radiant power, while light beams L' directed to the ground or to the sky and drawn in broken lines are emitted with a smaller radiant power. To be more specific, if a light beam is emitted at an angle α measured in a vertical plane PY with the horizontal plane as reference, it will have a high radiant power P_{high} if the angle α is within an angle range defined by -α₁ < α < α₂. A light beam that is emitted at an angle α outside this range (i.e. α < -α₁ or α > α₂) will be emitted with a lower radiant power P_{low} < P_{high}.

It is also possible to have more than two different radiant powers P_{high} and P_{low}. For example, light beams with directions in direct vicinity to α₁ or α₂ may be emitted with an intermediate radiant power P_{med} with P_{high} > P_{med} > P_{low}.

As a matter of course, the same principle can be applied for horizontal planes PX. Then light beams directed at larger angels to the sides, for example the beams L11 and L14 in Figure 2, may be emitted with lower radiant energy than the central light beams L12 and L13.

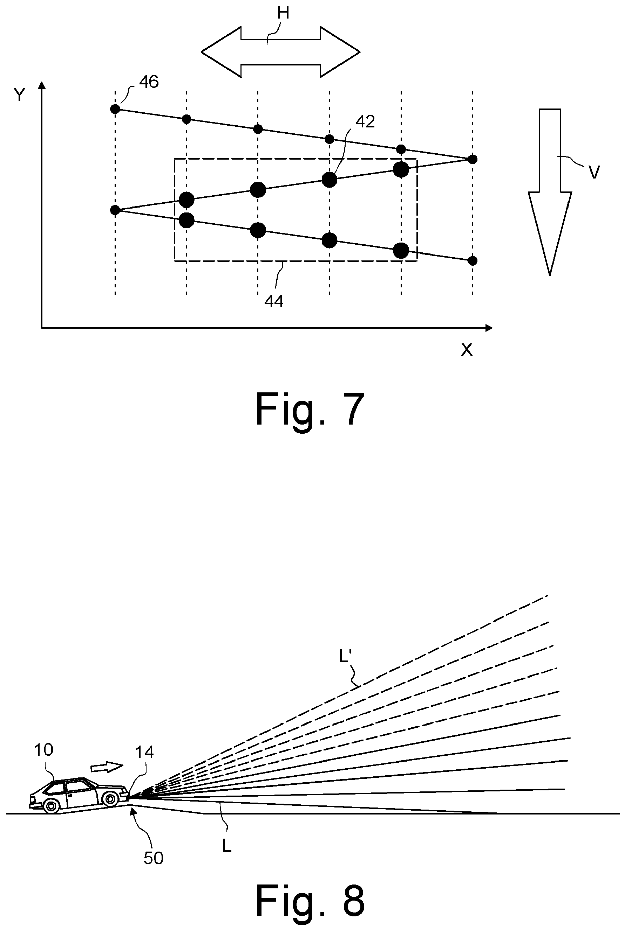

Figure 7 is a graph illustrating a scenario in which a light beam L scans the environment in a zig-zag pattern. Instead of first scanning a complete horizontal plane before the scanning mirror 36 of the scanning unit 35 moves to its next position, the scanning pattern is obtained by a superposition of an oscillating movement H in a horizontal plane and a continuous vertical movement V caused by a continuous rotation of the scanning mirror 36. Light beams 42 with directions within a certain solid angle range, which is indicated in Figure 7 by a rectangle 44, are emitted with the high radiant power P_{high}, while the remaining light beams 46 are emitted with the lower radiant power P_{low}. The different power levels are represented in Figure 7 by circles having different diameters.

### b) Parameter Dependency

Figure 8 illustrates in a schematic side view illustrating a scenario that is similar to the one shown in Figure 6. In this scenario, however, the vehicle 10 slowly drives on a ground that is not flat, but has a ramp 50 which causes the vehicle 10 to perform an upward pitch rotation. Without any countermeasures, this would have the effect that more light beams with maximum radiant power are directed upward where less relevant objects or no objects at all are located.

In an embodiment, the vehicle 10 has a pitch sensor that measures the pitch angle of the vehicle 10. Together with the information provided by the scanning device 14, the control and calculation unit 37 is able to detect the scenario shown in Figure 8 and to modify the radiant power of the emitted light beams such that basically the same angular radiant power distribution is obtained as shown in Figure 6 in which there is no ramp. More specifically, more light beams directed upwards are emitted with reduced radiant power, while light beams directed downwards relative to the vehicle - which is in this scenario substantially parallel to the street - are emitted with maximum radiant power.

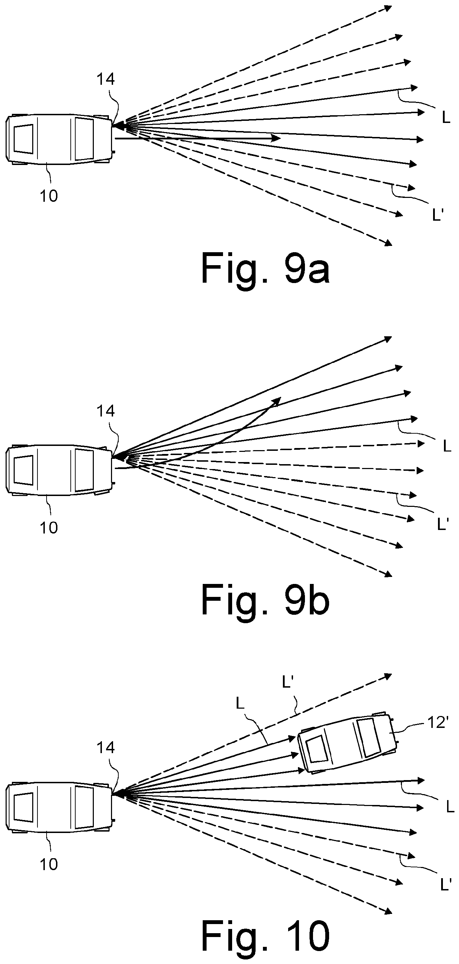

Figure 9a is a schematic top view on a vehicle 10 that drives straight ahead, as this is indicated by an arrow. In this embodiment only the central region receives light beams L having maximum radiant power. The light beams L' directed at larger angels to the sides are emitted with reduced radiant power. This is the concept, which has been explained above with reference to Figure 6, but now applied to the horizontal plane.

The vehicle 10 in this embodiment has a steering angle sensor that measures the steering angle. This makes it possible to modify the angular power distribution of the light beams based on the steering angle.

In Figure 9b the vehicle drives along a left turn. Consequently, it is necessary to improve the accuracy and/or reliability of the range measurement in the area into which the vehicle 10 is going to drive. This is accomplished by emitting the light beams L directed straight ahead and to the left side with maximum radiant power, while the light beams L' directed to the right side have a reduced radiant power.

In the embodiments shown in Figures 8, 9a and 9b, the parameter on which the radiant power of the laser light depends is a sensor signal. In a broader sense, the parameter may also be the result of more complex computations that are carried out for detecting certain events.

Such an event could be the presence of another vehicle 12', as this is illustrated in Figure 10. Detecting the other vehicle 12' typically involves complex computations, as this is known in the art as such. Once it has been determined that there is another vehicle 12' at a range *R* and driving with a speed v, the light beams directed towards the vehicle 12' should have maximum radial power although the other vehicle 12' is partly outside the central region in front of the vehicle 10.

In complex scenarios with many other road users distributed over the entire field of view, it will usually be necessary to emit all light beams with maximum radiant power. In scenarios without any other road users, animals or trees, also the central light beams may be emitted with reduced radiant power. In the event that an object belonging to a certain class of objects is detected, the radiant power of slight beams directed towards this object will be increased.

## Claims

1. A method for performing scanning FMCW LiDAR range measurements, comprising the following steps:
producing laser light (L, L') having a varying frequency;
directing the laser light in different directions;
detecting a superposition of laser light that was reflected at an object (12) with laser light that was not reflected at the object (12);
determining the range to the object (12) based on the detected superposition;
wherein
a radiant power of the laser light (L, L') is varied depending on
at least one time varying parameter
and/or on
the direction in which the laser light (L, L') is directed.

2. The method of claim 1, wherein a light amplifier (24), which is arranged in a light path of the laser light (L, L'), amplifies the laser light by a gain factor G, and wherein the radiant power of the laser light is varied by changing the gain factor G.

3. The method of claim 1 or 2, wherein the method is performed in a vehicle (10).

4. The method of claim 3, wherein the at least one time varying parameter is a steering angle of the vehicle (10).

5. The method of claim 3 or 4, wherein the at least one time varying parameter is a pitch angle of the vehicle (10).

6. The method of any of claims 3 to 5, wherein the at least one time varying parameter is a velocity of the vehicle (10).

7. The method of any of claims 3 to 6, wherein the at least one time varying parameter is an event.

8. The method of claim 7, wherein the event is a detection of an object (12') belonging to a predefined object class.

9. A device (14) for scanning FMCW LiDAR range measurement, comprising
a laser light source (16) configured to produce laser light having a varying frequency,
a scanner (28, 35) configured to direct the laser light in different directions,
a detector (32) configured to detect a superposition of laser light that was reflected at an object (12) with laser light that was not reflected at the object (12),
a calculation unit (37) configured to determine the range to the object (12) based on the superposition detected by the detector (32), and
a control unit (37) configured to vary a radiant power of the laser light depending on time varying parameters and/or on the direction in which the scanner (28, 35) directs the laser light.

10. The device of claim 9, comprising a light amplifier (24) arranged in a light path of the laser light, wherein the control and calculation unit (37) is configured to vary the radiant power of the laser light by controlling the light amplifier (24).

11. A vehicle (10), comprising the device (14) of claim 9 or 10.

12. The vehicle of claim 11, wherein the time varying parameter is one in the group consisting of: a steering angle of the vehicle (10), a pitch angle of the vehicle, a velocity of the vehicle, and an event.

13. The vehicle of claim 12, wherein the event is a detection of an object (12') belonging to a predefined object class.
